# EUROPÄISCHE PATENTSCHRIFT

(11) **EP 2 827 797 B1**
(45) Veröffentlichungstag und Bekanntmachung des Hinweises auf die Patenterteilung: **18.07.2018**
(21) Anmeldenummer: 13712192.7
(22) Anmeldetag: 20.03.2013
(51) Int. Cl.: A61C 19/04

(54) **VORRICHTUNG ZUR ERFASSUNG DES PARODONTALSTATUS UND VERFAHREN ZUR ERMITTLUNG DER TIEFE VON VERTIEFUNGEN**
DEVICE FOR DETERMINING THE PERIODONTAL STATUS, AND METHOD FOR ASCERTAINING THE DEPTH OF DEPRESSIONS
DISPOSITIF POUR DÉTECTER L'ÉTAT PARODONTAL ET PROCÉDÉ POUR DÉTERMINER LA PROFONDEUR D'APPROFONDISSEMENTS

(30) Priorität: 20.03.2012 DE 102012102371; 07.05.2012 DE 102012103970
(43) Veröffentlichungstag der Anmeldung: 28.01.2015
(73) Patentinhaber: ParoStatus.de GmbH, 12621 Berlin (DE)
(72) Erfinder: FRESMANN, Sylvia, 48249 Dülmen (DE); KOSSACK, Christoph, 12623 Berlin (DE)
(74) Vertreter: Habbel, Ludwig
(86) Internationale Anmeldenummer: PCT/EP2013/055826
(87) Internationale Veröffentlichungsnummer: WO 2013/139858

(56) Entgegenhaltungen:
- WO-A1-98/06352
- US-A- 5 244 387
- US-A- 5 423 677
- US-A- 6 024 564

## Beschreibung

Die Erfindung betrifft eine Intraoral-Sonde zur Erfassung des Parodontalstatus, also der so genannten Zahntaschentiefe, sowie ein Verfahren zur Tiefenmessung, also zur Ermittlung der Tiefe von einige Millimeter tiefen Vertiefungen.

Aus der US 5 423 677 A ist eine Intraoral-Sonde bekannt. Diese weist eine transluzente Untersuchungsspitze auf. Im Griffstück ist eine Lichtquelle vorgesehen, so dass die Untersuchungsspitze von innen beleuchtet werden kann, um die Ablesbarkeit von Markierungen zu verbessern, die außen an der Untersuchungsspitze angeordnet sind.

Aus der US 5 244 387 A ist eine Intraoral-Sonde bekannt. Diese weist eine Lichtquelle auf, deren Lichtstrahlen von außen auf die Untersuchungsspitze gerichtet werden können und relativ zu der Untersuchungsspitze beweglich sind. Ein Detektor erfasst Lichtstrahlen, die von dem aus der Zahntasche ragenden Abschnitt der Untersuchungsspitze reflektiert werden, so dass anhand dieser reflektierten Strahlen die Zahntaschentiefe berechnet werden kann.

Aus der US 6 024 564 A ist eine Intraoral-Sonde bekannt. Diese weist eine Untersuchungsspitze auf, deren freies, in eine Zahntasche einzuführendes Ende keinen kreisrunden Querschnitt aufweist, sondern welches mittels eines flachen Querschnitts etwa blattförmig ausgestaltet ist.

Aus der DE 295 00 933 U1 ist eine Intraoral-Sonde bekannt. Diese weist ein längliches Griffstück auf, an dessen vorderem Ende auswechselbare Untersuchungsspitzen angebracht werden können, die beispielsweise auf das Griffstück aufgeschraubt werden können, so dass sie bei Erreichen eines Anschlags rotationsfest am Griffstück festgelegt sind. Am gegenüberliegenden Ende weist das Griffstück Anschlussmittel für ein Übertragungskabel auf, um Messdaten zu einem Auswertungsgerät übertragen zu können.

Die gattungsgemäße Intraoral-Sonde verwendet bewegliche Teile im Inneren des Griffstücks, um die Eindringtiefe der Untersuchungsspitze automatisch erfassen zu können. Dazu ist insbesondere auch die Untersuchungsspitze selbst mehrteilig aufgebaut. Sie weist ein Führungsröhrchen auf, welches fest stehend montiert ist sowie die eigentliche Untersuchungsspitze, die in diesem Röhrchen längs beweglich geführt ist. Verschmutzungen oder anderweitig bedingte Reibungen zwischen den beweglichen Elementen der gattungsgemäßen Intraoral-Sonde können die Untersuchungsergebnisse verfälschen, da sie die Beweglichkeit der Untersuchungsspitze beeinflussen können.

Aus der WO 98/06352 A1 ist eine gattungsgemäße Intraoral-Sonde mit einem Griffstück und einer darin angeordneten Kamera sowie mit einer Untersuchungsspitze bekannt. Die Kamera weist ein Blickfeld auf, welches im wesentlichen in axialer Richtung des Griffstücks ausgerichtet ist.

Der Erfindung liegt die Aufgabe zugrunde, eine gattungsgemäße Intraoral-Sonde dahingehend zu verbessern, dass diese eine automatische Erfassung der Zahntaschentiefe mit großer Zuverlässigkeit ermöglicht. Weiterhin liegt der Erfindung die Aufgabe zugrunde, ein Verfahren zur Ermittlung der Tiefe von einige Millimeter tiefen Vertiefungen anzugeben.

Diese Aufgabe wird durch eine Intraoral-Sonde mit den Merkmalen des Anspruchs 1 gelöst sowie durch ein Verfahren mit den Verfahrensschritten gemäß Anspruch 12.

Die Erfindung schlägt mit anderen Worten vor, die Lage der Untersuchungsspitze mittels einer am Griffstück vorgesehenen Kamera zu erfassen. Anhand des Maßes, in welchem der in die Zahntasche eindringende Anteil der Untersuchungsspitze größer wird, ergibt sich zwangsläufig, dass der verbliebene sichtbare Anteil der Untersuchungsspitze kürzer wird. In Abhängigkeit von der nun noch sichtbaren und mittels der Kamera erfassten Länge der Untersuchungsspitze kann daher automatisch die Zahntaschentiefe ermittelt werden. Das Maß, um welches die Untersuchungstiefe in die Zahntasche eindringen kann und welches die Zahntaschentiefe darstellt, wird auch als Sondierungstiefe bezeichnet. Dabei sind keinerlei bewegliche Teile erforderlich, so dass die Sonde mit großer Zuverlässigkeit funktioniert und dementsprechend das durchgeführte Zahntaschentiefen-Messverfahren Ergebnisse von hoher Zuverlässigkeit liefert. Dabei ist vorschlagsgemäß vorgesehen, dass die Kamera ein radial aus dem Griffstück gerichtetes Blickfeld aufweist, dass also die Objektivöffnung am Umfang des Griffstücks derart angeordnet ist, dass das Blickfeld der Kamera radial aus dem Griffstück weisend ausgerichtet ist. Dies erleichtert eine ergonomische Handhabung der Intraoral-Sonde.

Vorteilhaft kann die Untersuchungsspitze derart farbig gestaltet sein, dass sie mittels einer automatischen Bildauswertung zuverlässig von der übrigen intraoralen Umgebung unterschieden werden kann, beispielsweise von den typischerweise auftretenden Farben der Zähne, des Zahnfleisches und eventueller zahnärztlicher Hilfsmittel. Daher kann beispielsweise vorteilhaft vorgesehen sein, dass die Untersuchungsspitze eine blaue oder grüne Farbgebung aufweist. Herstellungstechnisch einfach kann die gesamte Oberfläche der Untersuchungsspitze eine derartige Farbe aufweisen, beispielsweise durch Lackierung, Eloxierung o. dgl., oder indem die Untersuchungsspitze aus einem dementsprechend eingefärbten Material hergestellt wird. Für die vorgesehene automatische Bildauswertung ist es allerdings ausreichend, dass nicht notwendigerweise die gesamte Untersuchungsspitze, sondern lediglich deren zur Kamera gerichtete Oberfläche die gewünschte Farbgebung aufweist.

Auch der Verlauf der Untersuchungsspitze selbst kann vorteilhaft nicht axial oder koaxial zum Griffstück ausgerichtet sein, sondern davon abweichend. Auf diese Weise wird die Zugänglichkeit zu den einzelnen Zahntaschen und somit die Handhabung der gesamten Sonde erleichtert. Vorteilhaft kann daher vorgesehen sein, dass das Griffstück zumindest abschnittsweise entlang seiner Länge eine vom Kreisrund abweichende Querschnittskontur aufweist, und dass an diesem Abschnitt die Untersuchungsspitze festgelegt werden kann. Aufgrund der Querschnittskontur ist sichergestellt, dass die Untersuchungsspitze gegen Rotation gesichert am Griffstück festgelegt ist. Eine gute Zugänglichkeit zu sämtlichen vier Kiefer-Quadranten wird dadurch ermöglicht, dass der Abschnitt des Griffs um 180° rotationssymmetrisch ausgestaltet ist, so dass die Untersuchungsspitze in zwei um 180° gedrehten Ausrichtungen an diesem Abschnitt festgelegt werden kann.

Vorteilhaft kann die Untersuchungsspitze an einem Klemmring gehalten werden, der auf das Griffstück aufgesteckt werden kann. Auf diese Weise kann bei Verwendung desselben Griffstücks ein schneller Wechsel von Untersuchungsspitzen erfolgen, oder die Untersuchungsspitze kann wie oben erwähnt zu Gunsten einer anderen Ausrichtung umgesteckt werden.

Ein solcher Klemmring kann vorteilhaft beiderseits von der Kamera am Griffstück anliegen, so dass eine möglichst stabile Halterung der Untersuchungsspitze am Griffstück gewährleistet werden kann. Dabei weist der Klemmring eine Ausnehmung auf, die das Blickfeld der Kamera frei lässt, indem sie beispielsweise die gesamte Objektivöffnung der Kamera frei lässt, welche in dem Griffstück vorgesehen ist.

Vorteilhaft kann in dem der Sonde zugeordneten Auswertungsgerät ein Datenspeicher vorgesehen und dem Auswertungsgerät ein Schalter zugeordnet sein. Der Schalter wird vom Benutzer der Sonde betätigt, um gewünschte Messwerte abzuspeichern und um anhand dieser gespeicherten Werte, die für bestimmte Zahntaschentiefen des Patienten stehen, später einen Vergleich über den Erkrankungsverlauf zu ermöglichen und beispielsweise Behandlungsfortschritte nachweisen zu können.

Dieser Schalter kann vorteilhaft weder an der Intraoral-Sonde noch an dem Auswertungsgerät vorgesehen sein, sondern vielmehr als separates Element wie z. B. als Fußschalter ausgestaltet sein. Auf diese Weise ist die Handhabung der Intraoral-Sonde nicht dadurch beeinflusst, dass an der Sonde selbst Schalter bzw. Taster betätigt werden müssen, was ggf. zu unbeabsichtigten Bewegungen der Sonde führen könnte. Die Betätigung eines Fußschalters hingegen lässt die Handhabung der Sonde selbst völlig unbeeinflusst und erlaubt andererseits die Anbringung des Schalters dort, wo es für den Benutzer der Intraoral-Sonde ergonomisch vorteilhaft ist, so dass der Benutzer sich nicht wiederholt dem Auswertungsgerät zuwenden muss, um die einzelnen ermittelten Daten abspeichern zu können.

Vorteilhaft kann eine Beleuchtungseinrichtung vorgesehen sein, die auf das Blickfeld der Kamera ausgerichtet ist. Dies stellt erstens zuverlässige Messergebnisse dadurch sicher, dass in der Mundhöhle des Patienten stets für eine optimale Ausleuchtung Sorge getragen wird. Zweitens kann durch die an der Sonde selbst vorgesehene Beleuchtung der Einfluss von Umgebungslicht minimiert werden. Umgebungslicht könnte nämlich beispielsweise abhängig von der Jahres- und Tageszeit zu unterschiedlichen Lichtfarben führen, indem sich Tageslicht unterschiedlicher Helligkeit und Farbtemperatur mit im Behandlungsraum vorhandenen Kunstlicht mischt. Diese unterschiedlichen Lichteinflüsse können die automatische Farbauswertung und die korrekte Erfassung der gewünschten Messwerte beeinflussen. Durch die an der Sonde selbst vorgesehene Beleuchtungseinrichtung werden diese Einflüsse von außen zuverlässig ausgeschlossen oder zumindest so weit verringert, dass sie die korrekten Messergebnisse nicht gefährden können.

Dabei kann insbesondere vorgesehen sein, dass vor Beginn einer Messreihe, wenn also die Intraoral-Sonde in Betrieb genommen wird, eine automatische Kalibrierung vorgenommen wird. Durch die definierte Positionierung der Untersuchungsspitze am Griffstück ist sichergestellt, dass sich die Sonde in einem bestimmten Bereich des Kamera-Blickfelds befindet. Dementsprechend kann der in diesem Bereich ermittelte Farbwert als Referenzfarbe herangezogen werden, der bei der späteren Sondierung die Ermittlung ermöglicht, ein wie großer Anteil der Untersuchungsspitze sichtbar ist. Ausgehend von diesem sichtbaren Anteil der Untersuchungsspitze kann der nicht sichtbare Anteil der Untersuchungsspitze ermittelt werden, so dass dieser ermittelte Wert dann als Wert der Zahntaschentiefe abgespeichert werden kann. Falls sich über lange Zeit langsam die Lichtfarbe der Beleuchtungseinrichtung verändernd sollte, wird durch die erwähnte Kalibrierung vor der Inbetriebnahme der Intraoral-Sonde sichergestellt, dass die automatische Erfassung der sichtbaren Anteile der Untersuchungsspitze mit großer Zuverlässigkeit erfolgen kann, so dass als Resultat davon auch die Ermittlung der Zahntaschentiefe dementsprechend genau und zuverlässig erfolgen kann.

Als Beleuchtungseinrichtung kann vorteilhaft eine LED vorgesehen sein, die neben der Objektivöffnung der Kamera angeordnet ist. Eine LED behält über eine lange Betriebsdauer Ihre Farbtemperatur bei und ist zudem wegen ihrer geringen baulichen Abmessungen und der geringen Wärmeentwicklung vorteilhaft, da sie dementsprechend problemlos im Griffstück angeordnet werden kann. Es können mehrere LEDs als Beleuchtungseinrichtung vorgesehen sein, so dass durch die Anzahl und die Leistungsfähigkeit der verwendeten LEDs einerseits die gewünschte Ausleuchtung der Untersuchungsspitze beeinflusst werden kann. Zudem kann so eine möglichst schattenfreie und gleichmäßige Ausleuchtung der Untersuchungsspitze ermöglicht werden, was eine hervorragende Abgrenzung des von der Kamera erfassten farblichen Bereichs, der die Untersuchungsspitze darstellt, von umgebenden Mundbereichen des Patienten ermöglicht.

Mittels der vorschlagsgemäßen Intraoral-Sonde kann nicht nur die Tiefe von Zahntaschen oder der Gingivaverlauf ermittelt werden. Die zahnärztliche Intraoral-Sonde kann auch bei branchenuntypischen Anwendungsfällen eingesetzt werden, wobei statt der Zahntaschentiefe die Tiefe anderweitiger, mehrere Millimeter großer Vertiefungen ermittelt wird. So kann beispielsweise eine Qualitätskontrolle von profilierten Bauteilen erfolgen, indem die Tiefe der Profilierung ermittelt wird, oder die Tiefe von Sackbohrungen kann überprüft werden. Dabei ist vorteilhaft, dass mit der Intraoral-Sonde ein leichtes, schmales Messgerät bereitgestellt wird, welches manuell geführt und daher beliebig ausgerichtet werden kann, ohne dass es dazu einer komplizierten Halterung und Steuerung bedarf, um verschiedene Messpunkte anzusteuern. Nachfolgend wird die Verwendung der vorschlagsgemäßen Intraoral-Sonde jedoch anhand der typischen zahnmedizinischen Anwendungsfälle erläutert.

Mittels der beschriebenen Untersuchungsspitze können Vertiefungen in einem zahnmedizinisch typischen Bereich, z. B. bis zu einer Tiefe von etwa 10 mm gemessen werden. Falls die Untersuchungsspitze auswechselbar an dem Griffstück gehalten ist, kann sie gegen eine andere Untersuchungsspitze ausgetauscht werden, die mittels entsprechender Ausleger in einem größeren Abstand von dem Griffstück gehalten ist, so dass in dem unveränderten Erfassungsbereich der Kamera eine längere Untersuchungsspitze untergebracht werden kann und beispielsweise Tiefen bis zu einer Größenordnung von 15 oder 20 mm gemessen werden können.

Bei der Durchführung der Messung der Tiefe, z. B. der Zahntaschentiefe, ist vorteilhaft vorgesehen, dass die von der Kamera erfassten Bilder ununterbrochen, als so genannter Video-Stream, zu der Auswertungsschaltung übermittelt werden. An einem bestimmten Zeitpunkt wird ein Befehlssignal durch den Benutzer der Sonde erzeugt und an die Auswertungsschaltung übermittelt, so dass der zu diesem Zeitpunkt ermittelbare Wert der Zahntaschentiefe abgespeichert wird. Dieser Befehl kann entweder durch Betätigung des bereits erwähnten Fußschalters erfolgen, oder er kann mittels einer Sprachsteuerung erfolgen. Dabei kann vorgesehen sein, dass stets derselbe Befehl ausgegeben wird, beispielsweise das Wort "speichern". Alternativ dazu kann jedoch auch vorgesehen sein, dass unterschiedliche Speicherbefehle verwendet werden, die nicht nur das Speichern selbst auslösen, sondern die auch eine Zuordnung des erfassten Messwerts zu einem bestimmten Zahn des Patienten ermöglichen. So kann beispielsweise der Speicherbefehl einerseits den Zahn identifizieren, beispielsweise "18" und zudem eine von mehreren Messstellen an dem jeweiligen Zahn identifizieren, so dass beispielsweise der gesamte Speicherbefehl "18-2" lauten kann, um die zweite Messstelle des Mahlzahns "18" im rechten Oberkiefer des Patienten zu identifizieren.

Die Erfassung der sichtbaren Länge der Untersuchungsspitze kann vorteilhaft dadurch erfolgen, dass zunächst eine bestimmte Stelle im Blickfeld der Kamera als Referenzstelle definiert wird. Es handelt sich dabei um eine Stelle, an welcher sich die Untersuchungsspitze im Blickfeld der Kamera befindet. Diese Referenzstelle kann beispielsweise herstellerseitig fest vorgegeben sein, wenn die Positionierung der Untersuchungsspitze stets so eindeutig erfolgt, dass diese mit großer Zuverlässigkeit stets denselben Bereich im Blickfeld der Kamera einnimmt. Alternativ dazu kann der Benutzer der Intraoral-Sonde zunächst die Untersuchungsspitze am Griffstück befestigen, wobei vorgesehen ist, dass das Kamerabild auf einen Monitor ausgegeben wird, so dass nun der Verlauf der Untersuchungsspitze im Blickfeld der Kamera auf dem Monitor sichtbar ist. Der Benutzer kann nun, beispielsweise mithilfe eines Mausklicks, die Referenzstelle selbst festlegen. Auf diese Weise ist sichergestellt, dass auch dann, wenn die Untersuchungsspitze unterschiedlich befestigt wird, oder wenn sie ggf. leicht verbogen sein sollte, die vom Benutzer definierte Referenzstelle dort liegt, wo sich tatsächlich die Untersuchungsspitze im Blickfeld der Kamera befindet.

Die an dieser Referenzstelle, die entweder vorgegeben oder durch den Benutzer bestimmt ist, von der Kamera erfasste Farbe wird als Referenzfarbe definiert. Dieser Vorgang stellt eine Kalibrierung dar, so dass bei unterschiedlichen Beleuchtungs-Lichtfarben, oder auch bei einer verfärbten Untersuchungsspitze, deren Farbgebung gegebenenfalls von ihrem Auslieferungszustand abweicht, vor Beginn der Messungen eine klare Definition der von der Kamera erfassten Farbe ermöglicht wird, welche das Vorhandensein der Untersuchungsspitze repräsentiert.

Dabei kann vorteilhaft vorgesehen sein, dass die Untersuchungsspitze zumindest auf ihrer im Blickfeld der Kamera liegenden Oberfläche eine Farbgebung aufweist, die von der übrigen im Blickfeld der Kamera liegenden Umgebung abweicht, so dass die Anwesenheit der Untersuchungsspitze zuverlässig von der übrigen Umgebung unterschieden werden kann und somit eine automatische Bildauswertung zuverlässig erfolgen kann. Bei technischen Anwendungen zur Tiefenmessung kann die Untersuchungsspitze daher eine Farbgebung aufweisen, die zu den zu prüfenden Werkstücken kontrastiert. Bezogen auf zahnmedizinische Anwendungen kann die Referenzfarbe der Untersuchungsspitze vorteilhaft von den natürlichen intraoral vorkommenden Farben abweichen, beispielsweise indem die Untersuchungsspitze zumindest auf ihrer im Blickfeld der Kamera liegenden Oberfläche eine blaue oder grüne Farbgebung aufweist.

Ausgehend von dieser Referenzstelle wird anschließend automatisch in benachbarten Bildbereichen des von der Kamera erfassten Bildes das Vorhandensein dieser Referenzfarbe überprüft, und zwar mittels der erwähnten automatischen Bildauswertung. Anhand der Länge des Bildbereiches, der diese zuvor definierte Referenzfarbe aufweist, wird automatisch die sichtbare Länge der Untersuchungsspitze bestimmt, so dass, wie oben beschrieben, ausgehend von dieser sichtbaren Länge die unsichtbare Länge und damit die Tiefe der Zahntasche ermittelt werden kann.

Die automatische Ermittlung der Zahntaschentiefe mithilfe einer elektronischen Auswertungsschaltung kann auf unterschiedliche Weise erfolgen: Die Ermittlung der sichtbaren Länge der Untersuchungsspitze kann beispielsweise dadurch erfolgen, dass ausgehend von dem Referenzpunkt und der diesem Referenzpunkt zugeordneten Referenzfarbe automatisch sämtliche benachbarten Bildbereiche ausgewertet werden, also quasi kreisförmig um die Referenzstelle herum in immer größeren Radien.

Alternativ dazu kann eine vergleichsweise schnellere Ermittlung der sichtbaren Länge der Untersuchungsspitze dadurch erfolgen, dass nicht die gesamte Fläche, die im Blickfeld der Kamera liegt, automatisch ausgewertet werden muss, sondern lediglich ein schmaler Bereich entlang einer Linie. Diese Linie kann entweder ebenfalls herstellerseitig vorbestimmt sein, wenn nämlich die Anordnung der Untersuchungsspitze im Blickfeld der Kamera fest vorgegeben ist. Alternativ dazu kann, wie oben für die Bestimmung der Referenzstelle erwähnt, der Benutzer der Sonde mit einigen Mausklicks zwei oder mehr Punkte im Blickfeld der Kamera definieren, welche die Berechnung einer Linie ermöglichen, so dass die automatische Auswertung der von der Kamera erfassten Bilder auf diesen Bereich entlang der Linie und ggf. eines vergleichsweise schmalen Korridors rechts und links neben der Linie beschränkt werden kann. Dadurch kann die Anzahl der auszuwertenden Bildpunkte erheblich reduziert und eine dementsprechend schnellere automatische Bearbeitung ermöglicht werden.

Bei Auswertung der Referenzfarbe entlang dieser vorgegebenen Linie wird eine Grenzstelle ermittelt, an welcher die Sonde in das Zahnfleisch des Patienten eintaucht, und an welcher demzufolge das Vorhandensein der Referenzfarbe endet. Ohne Berechnungen anstellen zu müssen, kann eine schnelle, unkomplizierte und dennoch genaue Bestimmung der Zahntaschentiefe dadurch erfolgen, dass eine Vergleichstabelle in Form einer Datenbank in der Auswertungsschaltung vorgesehen ist. Diese Vergleichstabelle enthält erstens eine Vielzahl unterschiedlicher Werte für unterschiedliche Grenzstellen, beispielsweise die Lage jeder einzelnen dieser unterschiedlichen Grenzstellen im Blickfeld der Kamera, und zweitens ist jedem dieser Grenzstellen-Werte jeweils ein Wert zugeordnet, welcher den nicht sichtbaren Anteil der Untersuchungsspitze und damit die Tiefe der Zahntasche repräsentiert.

Die Übertragung der Kameradaten von der Intraoral-Sonde zum Auswertungsgerät erfolgt vorteilhaft drahtlos, so dass die Handhabung der Sonde möglichst einfach und ungehindert erfolgen kann. Beispielsweise kann das Bluetooth-Verfahren oder ein anderes Kurzstrecken-Funkverfahren für diese Datenübertragung genutzt werden.

Vorteilhaft kann vorgesehen sein, dass bei Verwendung einer vorschlagsgemäßen Sonde die Kamera mehrere Zoomstufen ermöglicht. Die Montage der Untersuchungsspitze vor dem Griffstück der Sonde definiert einen vorgegebenen Abstand der Untersuchungsspitze zur Kamera. Eine Eichung vom Kameramessfeld zur Untersuchungsspitze in Abhängigkeit von diesen eventuell möglichen Zoomstufen der Kamera wird herstellerseitig vorgenommen, so dass sichergestellt ist, dass die Untersuchungsspitze sich bis zu ihrem freien Ende stets im Blickfeld der Kamera befindet.

Die automatische Erfassung der Zahntaschentiefen kann wie folgt erfolgen:
Zunächst wird eine Anwendung am PC des Behandlers gestartet, wobei dieser PC das erwähnte Auswertungsgerät bildet. Dabei sind softwareseitig sowohl die Anzahl und auch die Position der zu messenden Zähne vorgegeben als auch die gewünschte Messreihenfolge. Diese Vorgaben kann der Benutzer der Software gegebenenfalls selbst beeinflussen, beispielsweise in Abhängigkeit davon,
- ob der jeweilige Patient voll bezahnt ist, also 32 Zähne hat,
- wie viele Messstellen pro Zahn gewünscht sind, beispielsweise bis zu 6 Messstellen pro Zahn,
- und in welcher Reihenfolge die Zähne abgearbeitet werden sollen.
Diese Vorgaben können jedoch auch softwareseitig fest vorgegeben sein.

Mit dem Start der Anwendung wird das von der Kamera erfasste Bild auf einem Monitor wiedergegeben, der sich im Blickfeld des Behandlers befindet. Der Behandler wird optisch und / oder akustisch zur Messung der ersten Messstelle aufgefordert. Er führt nun die Untersuchungsspitze an der ersten Messstelle ein.

Das Kamerabild mit dem Blickfeld bzw. Messfeld wird kontinuierlich zu dem PC übertragen, als so genannter Video-Stream. An einer definierten Stelle im Blickfeld der Kamera ist bekannt, nämlich herstellerseitig oder durch den Behandler zuvor festgelegt, dass sich dort die Untersuchungsspitze befindet. Die dort erfasste Bildfarbe wird als Referenzfarbe festgelegt. Der Referenzstelle benachbarte Bildbereiche werden nun automatisch darauf untersucht, ob dort die Referenzfarbe vorliegt. Auf diese Weise kann die Lage der Untersuchungsspitze und die sichtbare Länge der Untersuchungsspitze im Blickfeld der Kamera ermittelt werden. In Abhängigkeit von der Zoomstufe der Kamera kann anhand des mit der Referenzfarbe erfassten Bildbereichs die sichtbare Länge der Untersuchungsspitze festgelegt werden. Da die Gesamtlänge der Untersuchungsspitze bekannt ist, resultiert aus der Ermittlung der sichtbaren Länge der Untersuchungsspitze auch der verbleibende, unsichtbare Anteil der Untersuchungsspitze, welcher der Zahntaschentiefe gleichgesetzt wird.

Die Zahntaschentiefe bzw. die so genannte Sondierungstiefe wird in Echtzeit optisch auf dem Monitor neben dem Kamerabild ausgegeben. Wenn der Behandler einen Messwert, also einen berechneten Wert der Zahntaschentiefe abspeichern möchte, gibt es dazu ein entsprechendes Befehlssignal aus, z. B. betätigt er dazu einen Fußschalter oder gibt einen Sprachbefehl aus.

Sollten während der Berechnungen Fehler auftreten, oder sollte der Behandler Korrekturen vornehmen wollen, z. B. eine irrtümlich ausgelöste und abgespeicherte Messung korrigieren wollen, so kann der Behandler durch einen entsprechenden Schaltbefehl am Fußschalter eine derartige Korrektur manuell auslösen. Zu diesem Zweck kann beispielsweise ein Fußschalter mit mehreren Betätigungstasten verwendet werden, beispielsweise ein aus der Praxis bekannter Fußschalter mit drei Tasten. Weiterhin kann der Behandler eine Abspeicherung von Messwerten vermeiden, wenn das System selbst einen Fehler anzeigt. Beispielsweise können Reflexionen, Verzerrungen, schlechte Lichtverhältnisse, Verschmutzungen auf der Objektivöffnung, oder das Fehlen der Untersuchungsspitze im Blickfeld der Kamera dazu führen, dass bei der automatischen Bildauswertung ein Alarmsignal erzeugt wird und dieses optisch in Echtzeit auf dem Monitor neben dem Kamerabild ausgegeben wird. Der Behandler sieht also nicht nur die möglicherweise auch auf dem Monitor erkennbaren optischen Beeinträchtigungen des Kamerabildes, sondern wird auch darüber informiert, dass die zu einer Berechnung einer Zahntaschentiefe erforderliche Bildqualität nicht gegeben ist, so dass er entsprechende Gegenmaßnahmen treffen kann.

Wenn der Behandler die Sonde an der ersten Messstelle bis zum Widerstand eingeführt hat und die Messung vornehmen möchte, wird die mittlere Taste des als Beispiel genannten Fußschalters mit drei Tasten betätigt, so dass die an dieser Stelle automatisch ermittelte Zahntaschentiefe dokumentiert wird, also abgespeichert wird.

Dieser abgespeicherte Messwert wird ebenfalls auf dem Monitor als abgespeicherter Messwert angezeigt. Zudem kann ein akustisches Bestätigungssignal erfolgen, welches dem Behandler anzeigt, dass nach seiner Ausgabe des Speicherbefehls, nämlich der Betätigung des Fußschalters, dieser Befehl tatsächlich als Schaltbefehl in der Auswertungsschaltung umgesetzt wurde und ein Messwert gespeichert wurde.

Das Bestätigungssignal kann gleichzeitig dazu dienen, dem Behandler anzuzeigen, dass das System nun zur Erfassung eines neuen Messpunkts bereit ist, und dass der Behandler nun den nächsten Messpunkt in der festgelegten Reihenfolgen von Messpunkten aufsuchen kann.

Alternativ dazu kann anschließend an das Bestätigungssignal ein zusätzliches Bereitschaftssignal ausgegeben werden, welches dem Behandler anzeigt, dass nun die nächste Messung erfolgen kann. Es kann sich dabei um ein akustisches Signal handeln. Es kann sich aber auch, ggf. ergänzend zu dem akustischen Bestätigungssignal um ein optisches Signal handeln, welches nicht nur die Bereitschaft für eine erneute Messung anzeigt, sondern welches beispielsweise dem Behandler auch die nächste Messstelle anzeigen kann. So kann beispielsweise vorgesehen sein, auf dem Monitor die nächste abzuarbeitende Messstelle anzuzeigen, die sich beispielsweise aus der Definition von Zahnschema, Messreihenfolge und Anzahl der gewünschten Messstellen ergibt.

Auf diese Weise können die verschiedenen Messstellen nacheinander abgearbeitet werden.

Anhand des erwähnten Fußschalters mit drei Tasten kann vorgesehen sein, die mittlere Taste zum Abspeichern des jeweiligen Messwertes zu nutzen. Eine andere, beispielsweise die rechte Taste des Fußschalters, kann dazu dienen, gewisse Messpunkte zu überspringen, also innerhalb der vorgesehenen Messstellenreihenfolge vorwärts zu navigieren. Auf diese Weise kann vorgesehen sein, dass die Software nicht individuell an jeden einzelnen Patienten und dessen Bezahnung angepasst sein muss, vielmehr kann bei fehlenden Zähnen durch diese Vorwärtsnavigation das Überspringen mehrerer ansonsten vorgesehener Messstellen ermöglicht werden.

In ähnlicher Weise kann durch Betätigung des linken Tasters eine Rückwärtsnavigation in der Messstellenreihenfolge ermöglicht werden, beispielsweise um eine Korrektur von Fehlmessungen vornehmen zu können und für eine bereits abgearbeitete Messstelle eine erneute Messung durchführen zu können.

Oben wurde beispielhaft beschrieben, dass die Untersuchungsspitze an jedem einzelnen Zahn manuell so weit in die Zahntasche eingeführt wird, bis die Untersuchungsspitze auf einen gewissen Widerstand trifft, was stets der Fall ist, wenn die Untersuchungsspitze bis auf den Zahntaschenboden geführt wurde. Alternativ dazu kann vorgesehen sein, dass die Untersuchungsspitze druckempfindlich ausgestaltet ist, beispielsweise mittels eines teleskopierenden Elements, wie es aus dem gattungsbildenden Stand der Technik bekannt ist, oder mittels eines Drucksensors in dem Bereich, wo die Untersuchungsspitze am Griffstück gelagert ist. Auf diese Weise kann eine vollautomatische Steuerung vorgesehen sein, so dass die Untersuchungsspitze maschinell in die Zahntasche eingeführt wird, diese Bewegung bei Erreichen des maschinell erfassten Widerstands beendet wird, und anschließend das Messverfahren vollautomatisch durchgeführt wird.

Die vorschlagsgemäße Intraoral-Sonde ist vielseitig einsetzbar. Mit ihr kann über die Erfassung des Parodontalstatus hinaus auch der Gingivaverlauf erfasst werden, also die Linie, auf der das Zahnfleisch verläuft. Im gesunden Zustand verläuft die Gingiva meistens auf Höhe der Schmelz-Zement-Grenze der Zähne, also auf Höhe der Grenze zwischen dem die Zahnkrone bedeckenden Zahnschmelz und dem Zahnzement, welcher das Zahnbein bedeckt. Durch Alter oder Krankheit kann die Gingiva sich zurückziehen. Dies führt dazu, dass die Gingiva näher an der Zahnwurzel und weiter beabstandet von der Zahnkrone verläuft, was als Gingivarezession bezeichnet wird.

Wenn wie weiter oben beschrieben die Zahntaschentiefe erfasst wird, so beschreibt diese Zahntaschentiefe den Abstand zwischen der Gingivaverlaufslinie und dem Zahnfleischtaschenboden.

Unter Verwendung der vorschlagsgemäßen Intraoral-Sonde kann ein so genannter Attachmentverlust ermittelt werden, welcher den Abbau der bindegewebigen Verbindung des Zahnes mit dem umgebenden zahntragenden Knochengewebes wiederspiegelt, also die Summe aus Gingivaverlauf und Sondierungstiefe. Wenn z. B. eine gesunde Zahntasche mit 3 mm Sondierungstiefe gemessen wird, an derselben Stelle jedoch auch eine Gingivarezession von 5 mm vorliegt, so liegt ein Befund von insgesamt 8 mm (3 mm + 5 mm) ohne Attachment vor. Ein Patient mit einer im Vergleich dazu schlechteren Sondierungstiefe von z. B. 4 mm, aber einer geringeren Gingivarezession von 2 mm hat im Ergebnis einen besseren Befund von nämlich nur 6 mm (4 mm + 2 mm) ohne Attachment.

Die Ermittlung der Zahntaschentiefe allein gibt daher keine vollständige Information über den Zustand des Zahnhalteapparates. Als klinischer Wert ist insbesondere das "attachment level" bzw. der genannte Attachmentverlust von besonderer Bedeutung, da dieser Wert die relevante Angabe über die Qualität des Zahnhalteapparates enthält. Vorschlagsgemäß werden beide dazu erforderlichen Werte, nämlich der Gingivaverlauf und die Sondierungstiefe, zunächst mittels der beschriebenen Intraoral-Sonde ermittelt, und anschließend kann mittels ohnehin vorgesehenen elektronischen Auswertungsschaltung automatisch das "attachment level" bzw. der Attachmentverlust berechnet werden, sowie anschließend abgespeichert und / oder angezeigt werden.

Der Gingivaverlauf kann auch negative Werte aufweisen, wenn nämlich die Gingiva über der Schmelz-Zement-Grenze hinaus in Richtung Zahnkrone verläuft. Im absolut gesunden Gebiss ohne Attachmentverlust hat ein Mensch einen Gingivaverlauf von -2 mm und eine Sondierungstiefe von 2 mm, so dass kein Attachmentverlust vorliegt, bzw. ein rechnerischer Wert des Attachmentverlustes von 0 mm (-2 mm + 2 mm).

Vorteilhaft kann daher die Untersuchungsspitze eine maschinenlesbare Markierung aufweisen, z. B. einen kontrastfarbigen Punkt, Strich oder zirkumferent umlaufenden Ring auf der Untersuchungsspitze, wobei diese Markierung im Blickfeld der Kamera liegt. Die Markierung kann vorteilhaft so ausgestaltet sein, dass sie den von der Kamera sichtbaren Oberflächenbereich der Untersuchungsspitze nur teilweise unterbricht, indem z. B. der erwähnte Ring nicht zirkumferent geschlossen verläuft, sondern C-förmig oder als Reihe aus einzelnen, voneinander beabstandeten Punkten ausgestaltet ist, oder indem die erwähnten Punkt und Striche z. B. außermittig auf der Untersuchungsspitze angebracht sind. Auf diese Weise ist für die automatische Bildauswertung sichergestellt, dass bei der automatischen Ermittlung der Zahntaschentiefe eine kontinuierliche Linie der Referenzfarbe im Kamerabild vorliegt, so dass die sichtbare Länge der Untersuchungsspitze zuverlässig ermittelt werden kann.

Zur Messung des Gingivaverlaufs kann vorgesehen sein, dass der Behandler die Markierung auf Höhe der Schmelz-Zement-Grenze hält und einen speziellen Befehl auslöst, so dass mittels der automatischen Bildauswertung nicht die Sondierungstiefe ermittelt wird, sondern der sichtbare Bereich der Untersuchungsspitze von der Markierung bis zum Rand der Gingiva. Das dabei ermittelte Längenmaß ergibt den Gingivaverlauf.

Je nach dem Ausmaß einer eventuell vorliegenden Gingivarezession und je nach der Tiefe einer an der Messstelle vorhandenen Zahntasche kann es schwierig oder unmöglich sein, die Markierung genau in Übereinstimmung mit der Schmelz-Zement-Grenze zu positionieren. Daher können vorteilhaft mehrere Markierungen an der Untersuchungsspitze vorgesehen sein, beispielsweise in Abständen von 3 mm, 6 mm und 9 mm vom freien Ende der Untersuchungsspitze, also entsprechend Sondierungstiefen von 3 mm, 6 mm und 9 mm. Je nach der Situation an der Messstelle wählt der Behandler eine dieser 3 Markierungen als so genannte Referenzlinie und hält diese auf das Niveau der Schmelz-Zement-Grenze. Anschließend gibt er einen Befehl an die elektronische Auswertungsschaltung, welcher nicht nur die automatische Ermittlung des Gingivaverlaufs auslöst, sondern welcher auch die zusätzliche Information enthält, welche Referenzlinie zu berücksichtigen ist, also welche der drei Markierungen sich auf dem Schmelz-Zement-Grenzniveau befindet.

Nach Eingabe dieses Befehls wird in einem Speicher der elektronischen Auswertungsschaltung ein entsprechender Referenzlinien-Wert abgespeichert, der für die spätere automatische Ermittlung des Gingivaverlaufs relevant ist, um nämlich den Abstand zwischen der Referenzlinie und dem Zahnfleischrand automatisch zu ermitteln. Dabei läuft automatisch ein Verfahren ab, bei welchem anhand des in der elektronischen Auswertungsschaltung abgespeicherten Referenzlinen-Wertes und anhand des von der Kamera erfassten Bildes sowie der zugehörigen automatischen Bildauswertung der Gingivaverlauf mittels der elektronischen Auswertungsschaltung automatisch berechnet wird.

Der ermittelte Wert des Gingivaverlaufs kann anschließend automatisch in einem Speicher der elektronischen Auswertungsschaltung gespeichert werden, und / oder automatisch für den Benutzer lesbar an der Intraoral-Sonde angezeigt werden, und / oder zu einem weiteren elektronischen Gerät übertragen werden, beispielsweise zu einem externen Drucker, Speicher, oder Monitor.

Daher ist es nicht unbedingt erforderlich, dass die auf Höhe der Schmelz-Zement-Grenze befindliche Referenzlinie im Erfassungsbereich der Kamera liegt, was eine vollautomatische Ermittlung des Gingiva-Verlaufs ermöglichen würde, ohne dass eine manuelle Information zur Lage der Referenzlinie eingegeben werden muss bzw. ohne dass die Auswahl der zu berücksichtigenden Referenzlinie aus mehreren Referenzlinien erforderlich ist.

Eine vollautomatische Erfassung der Schmelz-Zement-Grenze mittels der Intraoral-Sonde kann erfolgen, wenn der Kontrast zwischen dem - üblicherweise helleren - Zahnschmelz und dem - üblicherweise demgegenüber dunkleren - Zahnfleisch ausreichend hoch ist. Der natürlich vorhandene Kontrast kann verstärkt werden, um die vollautomatische Erfassung der Schmelz-Zement-Grenze zu ermöglichen.
▪ Hierzu kann tatsächlich im Mundraum des Patienten der Kontrast erhöht werden, bevor mittels der Kamera der Intraoral-Sonde das Bild erfasst wird, z. B. mittels eines farbigen Markers, der am Zahnschmelz, jedoch nicht am Zahnfleisch anhaftet und nach der Behandlung ausgespült werden kann.
▪ Oder der Kontrast in dem von der Kamera bereits erfassten Bild kann automatisch mittels einer Bildbearbeitungs-Software in an sich bekannter Weise virtuell erhöht werden, bis z. B. der Zahnschmelz weiß und das Zahnfleisch schwarz dargestellt ist, so dass nun sehr einfach mittels einer elektronischen Bildauswertung die Schmelz-Zement-Grenze bestimmbar ist.
▪ Die automatisch berechnete, virtuelle Kontraststeigerung kann auf die Bildanteile außerhalb der Untersuchungsspitze begrenzt werden, so dass die Untersuchungsspitze selbst von der Kontraststeigerung ausgenommen bleibt. Dies erleichtert die anschließende automatische Bildauswertung, wenn berechnet wird, wie groß der Anteil der Untersuchungsspitze ist, welcher bis zu der Schmelz-Zement-Grenze reicht. Insbesondere wenn die Kamera Farbbilder liefert und die Untersuchungsspitze der Sonde eine bestimmte Farbe aufweist, die von den im Mundraum natürlich vorkommenden Farben abweicht, ist eine solche, automatische Begrenzung der virtuellen Kontraststeigerung auf die Bildanteile außerhalb der Untersuchungsspitze einfach möglich.

Es genügt aber auch, dass der Bediener die Angabe über die Höhe der automatisch auszuwertenden Referenzlinie eingibt, so dass eine teilautomatisierte Ermittlung des Gingiva-Verlaufs erfolgen kann, indem die Lage der Referenzlinie nicht durch eine automatische Bildauswertung ermittelt wird, sondern vom Bediener eingegeben wird:
Beispielsweise im Falle eines negativen Gingivaverlaufs, bei dem sich die Gingiva über die Schmelz-Zement-Grenze hinweg erstreckt, wird eine auf Höhe der Schmelz-Zement-Grenze befindliche Referenzlinie von der Gingiva verdeckt. In der Software der elektronischen Auswertungsschaltung ist hinterlegt, dass die Markierungslinien in bestimmter Höhe liegen, z. B. in den oben erwähnten Abständen von 3, 6, und 9 mm vom Ende der Untersuchungsspitze. Anhand der Eingabe des Bedieners, welche der Markierungslinien als Referenzlinie heranzuziehen ist, kann mittels der automatischen Bildauswertung und anhand des verbleibenden sichtbaren Abschnitts der Untersuchungsspitze automatisch berechnet werden, ein wie großer Teil der Untersuchungsspitze von der Referenzlinie ausgehend durch die Gingiva verdeckt ist, so dass dementsprechend der Wert für den Gingivaverlauf ermittelt werden kann. Diese automatische Berechnung erfolgt praktisch auf die gleiche Weise wie zur Ermittlung der Zahntaschen- bzw. Sondierungstiefe.

Das Gleiche gilt auch für die Fälle positiver Gingivaverläufe, bei denen sich die Gingiva nicht bis zur Referenzlinie erstreckt, so dass die Referenzlinie nicht von der Gingiva verdeckt ist. Auch in diesen Fällen kann vorgesehen sein, dass der Bediener angibt, welche der Markierungslinien als Referenzlinie heranzuziehen ist.

Aus der Einschubtiefe, die wie die Sondierungstiefe ermittelt wird (z. B. 4 mm) und der Angabe der Referenzlinie (z. B. die 6-mm-Markierung) kann automatisch der Gingivaverlauf berechnet werden (z. B. ein positiver Verlauf von 2 mm). Würde bei dem in Klammern angegeben Beispiel statt der sichtbaren 6-mm-Markierung die von der Gingiva verdeckte 3-mm-Markierung als Referenzlinie angegeben, ergäbe sich ein negativer Gingivaverlauf von 1 mm, da sich die Schmelz-Zement-Grenze auf Höhe der Referenzlinie befindet und sich die Gingiva um 1 mm darüber hinaus erstreckt. Im Unterschied zu der Ermittlung der Sondierungstiefe wird lediglich die Untersuchungsspitze nicht bis auf den Grund der Zahntasche geführt, sondern so weit, dass eine der Markierungslinien auf Höhe der Schmelz-Zement-Grenze befindet und als Referenzlinie definiert werden kann.

Wenn im Blickfeld der Kamera nicht nur die letzte Markierung (bei 9 mm Sondierungstiefe) sichtbar ist, sondern zwei oder alle drei Markierungen, ermöglicht die zusätzliche, vom Bediener eingegebene Information über die zur Berechnung heranzuziehende Referenzlinie, dass nun der Gingivaverlauf automatisch ermittelt werden kann. Die Information, welche Markierung als Referenzlinie dient, kann durch entsprechend häufige Betätigung des bereits erwähnten vierten Tasters des Fußschalters gegeben werden, indem dieser vierte Taster beispielsweise 1 mal betätigt wird, um die erste Markierung (3 mm Abstand vom Ende der Untersuchungsspitze) als Referenzlinie anzugeben, beziehungsweise 2 mal (6 mm) oder 3 mal betätigt wird (9 mm).

Bei negativen Werten führt der Behandler die Untersuchungsspitze so tief in die Zahntasche ein, bis die als Referenzlinie vorgesehene Markierung nicht mehr sichtbar ist. Beispielsweise, aber nicht notwendigerweise, kann die Untersuchungsspitze so tief in die Zahntasche eingeführt werden, bis die Markierung den Punkt erreicht, den der Behandler für die Schmelz-Zement-Grenze hält. Der Behandler gibt anschließend den Befehl an die elektronische Auswertungsschaltung, welcher die automatische Ermittlung des Gingivaverlaufs auslöst, und er übermittelt die zusätzliche Information, welche der drei Markierungen als Referenzlinie dient. Aus dem sichtbaren Teil der Sonde ergibt sich wie bei der Zahntaschen- bzw. Sondierungstiefenmessung die automatisch aus den Kamera- Bilddaten ermittelbare Einschubtiefe. Ist die Einschubtiefe (z. B. 8 mm) höher als die übermittelte Referenzmarkierung (z. B. 6 mm), so ergibt sich automatisch ein negativer Gingivaverlauf (z. B. -2 mm).

Vorteilhaft kann vorgesehen sein, dass zunächst automatisch ein Alarmsignal erzeugt wird, wenn die angegebene Referenzlinie unterhalb der Gingiva liegt. Dies kann nämlich auf mögliche Fehler oder Störungen hinweisen. Erst nach Abgabe eines Bestätigungssignals durch den Behandler, als Antwort auf das Alarmsignal, wird dann der Gingivaverlauf als "negativ" abgespeichert. Zur Abgabe des Bestätigungssignals kann vorgesehen sein, den erwähnten vierten Taster erneut zu betätigen.

Oben wurde beispielhaft beschrieben, dass die Untersuchungsspitze an jedem einzelnen Zahn manuell so positioniert wird, dass sich die Markierung der Untersuchungsspitze auf Höhe der Schmelz-Zement-Grenze des jeweiligen Zahns befindet. Die für die Messung des Gingivaverlaufs relevante Markierung wird also zusammen mit der Untersuchungsspitze vom Behandler gehandhabt. Alternativ dazu kann vorgesehen sein, dass zunächst eine Markierung ortsfest im Mund angebracht wird, z. B. in Form eines Fadens, der entlang der Schmelz-Zement-Grenzen mehrerer oder sogar sämtlicher Zähne verlegt wird. Anschließend wird die Untersuchungsspitze nacheinander vor jedem einzelnen Zahn so positioniert, dass sie beliebig weit in die Zahntasche eintaucht, und das Messverfahren kann anschließend vollautomatisch ablaufen, nachdem der entsprechende Befehl - z. B. mittels des Tasters eines Fußschalters - gegeben wird.

Die ohnehin mit der Kamera erfassten Bilder können nicht nur verwendet werden, um wie beschrieben die Sondierungstiefe, den Gingivaverlauf und das attachment level bzw. den Attachmentverlust zu ermitteln, sondern sie können vorteilhaft auch als Bilder abgespeichert werden. So werden zusätzliche, klinisch relevante Informationen verfügbar, z. B. über die Sauberkeit im Mundraum, eventuelle Gingiva-Wucherungen, Konkrement-Bildungen und dergleichen. Falls die verwendete Intraoral-Sonde eine eigene Beleuchtungseinrichtung aufweist, ist zudem eine hervorragende und gleichmäßige Ausleuchtung für sämtliche Bilder gewährleistet.

Falls derartige Bilder angefertigt und gespeichert werden, kann vorteilhaft vorgesehen sein, diese über einen längeren Zeitraum zu speichern, so dass mehrere Untersuchungen desselben Patienten zu mehreren, im Abstand von jeweils mehreren Monaten angefertigten Bildern seiner Zähne führen. In chronologischer Reihenfolge können anschließend die denselben Zahn betreffenden Bilder in Art eines Films wiedergegeben werden, so dass auch einem Laien - z. B. dem Patienten - anschaulich die Entwicklung dieses Zahns bzw. Zahnhalteapparates aufgezeigt werden kann. Mittels der so genannten "Morphing"-Technologie können die Übergänge zwischen aufeinanderfolgenden Bildern stufenlos dargestellt werden, indem entsprechende Zwischenbilder automatisch erzeugt werden. Hierdurch ist der ablaufende Prozess der Veränderungen des Zahns bzw. Zahnhalteapparates besonders anschaulich darstellbar.

Falls Bilder angefertigt und gespeichert werden, kann vorteilhaft vorgesehen sein, die Bilder einzelner Zähne zu einem Panoramabild zusammenzufügen, so dass sämtlichen Zähne des oberen bzw. unteren Kiefers auf derselben Darstellung ersichtlich sind. Auch bei derartigen Panoramabildern kann vorgesehen sein, die Bilder in chronologischer Reihenfolge und eventuell gemorpht wiederzugeben.

Ein Ausführungsbeispiel einer vorschlagsgemäßen Sonde wird anhand der rein schematischen Darstellungen nachfolgend näher erläutert. Dabei zeigt
- Fig. 1: eine Stirnansicht auf eine Intraoral-Sonde,
- Fig. 2: eine Seitenansicht auf die Intraoral-Sonde,
- Fig. 3: eine Draufsicht auf die Intraoral-Sonde, die
- Fig. 4 bis 6: unterschiedliche Attachmentverluste sowie unterschiedliche Gingivaverläufe, und
- Fig. 7: die Position der Intraoral-Sonde bei der Ermittlung des Gingivaverlaufs.

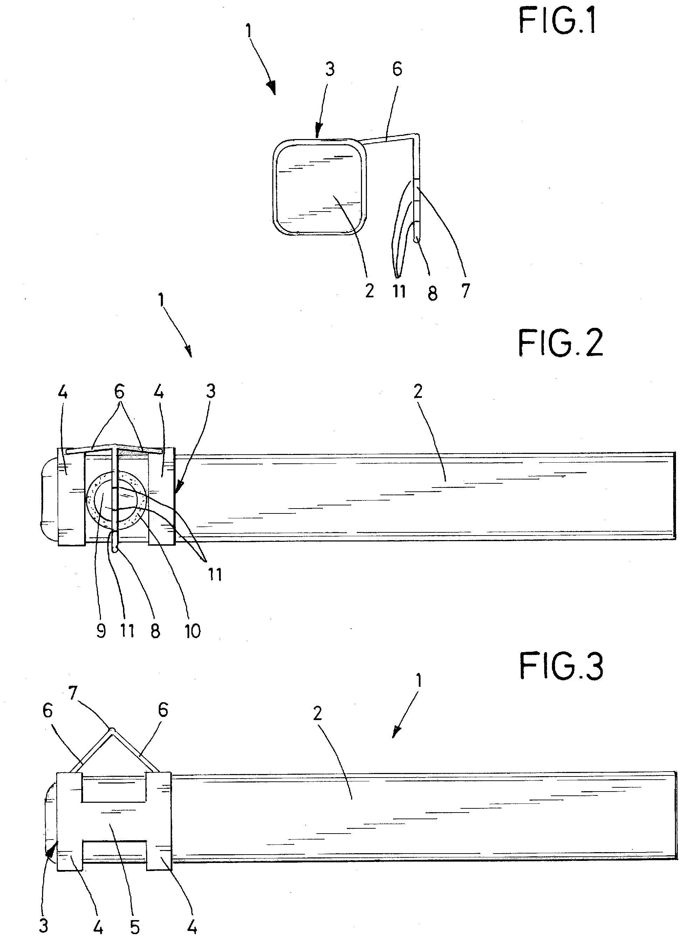

In den Zeichnungen ist mit 1 insgesamt eine Intraoral-Sonde bezeichnet, die ein Griffstück 2 aufweist. Fig. 1 zeigt, dass bei dem dargestellten Ausführungsbeispiel das Griffstück 2 der Intraoral-Sonde 1 einen quadratischen Querschnitt mit abgerundeten Ecken aufweist und somit einen vom Kreisrund abweichenden Querschnitt. Auf das Griffstück 2 ist ein Klemmring 3 aufgesteckt, der zwei Ringstücke 4 sowie einen Verbindungssteg 5 aufweist. An dem Klemmring 3 sind zwei Ausleger 6 befestigt, die eine Untersuchungsspitze 7 tragen, wobei die Untersuchungsspitze 7 entgegen ihrer Bezeichnung an ihrem freien Ende, den Auslegern 6 gegenüber liegend, mit einer kugelförmigen Verdickung 8 versehen und dementsprechend verletzungsarm ausgestaltet ist.

In der Umfangsfläche des Griffstücks 2 ist eine Objektivöffnung 9 vorgesehen. In dieser Objektivöffnung 9 kann unmittelbar eine Kameralinse angeordnet sein. Es kann jedoch auch vorgesehen sein, dass innerhalb des Griffstücks 2 eine Kamera angeordnet ist, deren Objektiv mittels eines Prismas, eines Umlenkspiegels o. dgl. auf die Objektivöffnung 9 ausgerichtet ist, so dass sich von der Objektivöffnung 9 aus das Blickfeld der Kamera nach außen vor das Griffstück 2 erstreckt, so dass sich jedenfalls die Untersuchungsspitze 7 bis zur Verdickung 8 im Blickfeld der Kamera befindet. Rings um die Objektivöffnung 9 ist eine Beleuchtungseinrichtung 10 in Form einer ringförmig ausgestalteter LED oder mehrerer ringförmig angeordneter LEDs vorgesehen, so dass zirkumferent um die Objektivöffnung 9 herum eine gleichmäßige, schattenfreie Ausleuchtung des Blickfelds der Kamera ermöglicht ist.

Der Klemmring 3 kann vom Griffstück 2 abgenommen und umgekehrt aufgesteckt werden, so dass bezogen auf die in den Fig. 1 und 2 dargestellte Ausrichtung der Untersuchungsspitze 7 diese dann nicht nach unten, sondern nach oben weisen würde, um beispielsweise die Untersuchungen am Oberkiefer des Patienten zu erleichtern bzw. um beim Wechsel zwischen rechten und linken Kieferquadranten den Zugang zu den Zahntaschen und die Handhabung der Sonde 1 zu erleichtern.

Auf der Untersuchungsspitze 7 sind drei Referenzlinien 11 vorgesehen, auf die später näher eingegangen wird.

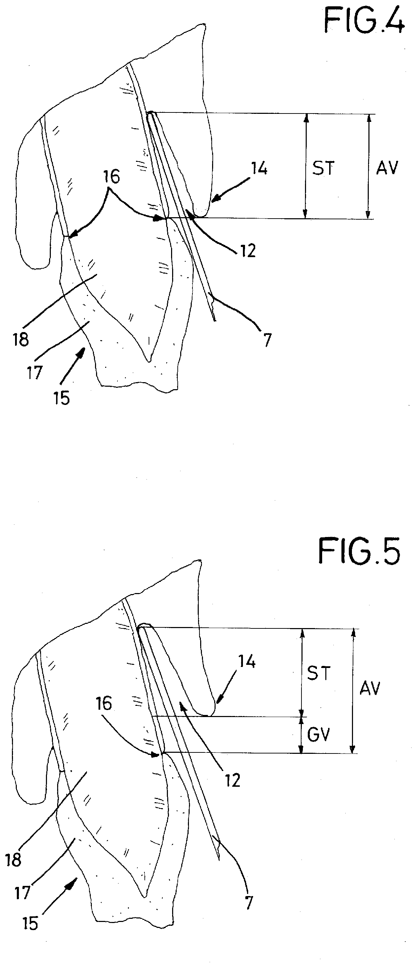

Die Fig. 4 bis 6 erläutern, wie mittels einer Untersuchungsspitze 7 die Sondierungstiefe ermittelt wird. Die Untersuchungsspitze 7 wird bis auf den Grund einer Zahntasche 12 geführt, die sich zwischen der Gingiva 14 und einem Zahn 15 befindet. Der Abstand zwischen dem Beginn der Gingiva 14 und dem Grund einer Zahntasche 12 wird als Sondierungstiefe ST bezeichnet. Der Zahn 15 weist eine Schmelz-Zement-Grenze 16 im Grenzbereich zwischen Zahnschmelz 17 und Zahnzement 18 auf. Im Rahmen des vorliegenden Vorschlags wird das Abstandsmaß zwischen der Schmelz-Zement-Grenze 16 und dem Beginn der Gingiva 14 als Gingivaverlauf GV bezeichnet.

Bei der in Fig. 4 dargestellten Situation verläuft die Schmelz-Zement-Grenze 16 auf der Höhe, auf welcher die Gingiva 14 beginnt, so dass der Wert des Gingivaverlaufs GV Null beträgt. Die mittels der Intraoral-Sonde 1 erfassbare Sondierungstiefe ist mit ST gekennzeichnet. Der Attachmentverlust AV, also die Beeinträchtigung des Zahnhalteapparates, entspricht bei der in Fig. 4 dargestellten Situation der Sondierungstiefe ST.

Bei der in Fig. 5 dargestellten Situation liegt eine Rückbildung der Gingiva 14 vor, so dass die Schmelz-Zement-Grenze 16 außerhalb der Gingiva 14 verläuft. Der Gingivaverlauf GV liegt in dem Bereich, der mittels der Kamera der Intraoral-Sonde 1 erfassbar ist, so dass er einen positiven Wert ergibt. Die mittels der Intraoral-Sonde 1 erfassbare Sondierungstiefe ST gibt die Beeinträchtigung des Zahnhalteapparates nicht vollständig und damit fehlerhaft wieder, denn der insgesamt vorliegende Attachmentverlust AV ergibt sich aus der Summe von Sondierungstiefe ST und Gingivaverlauf GV.

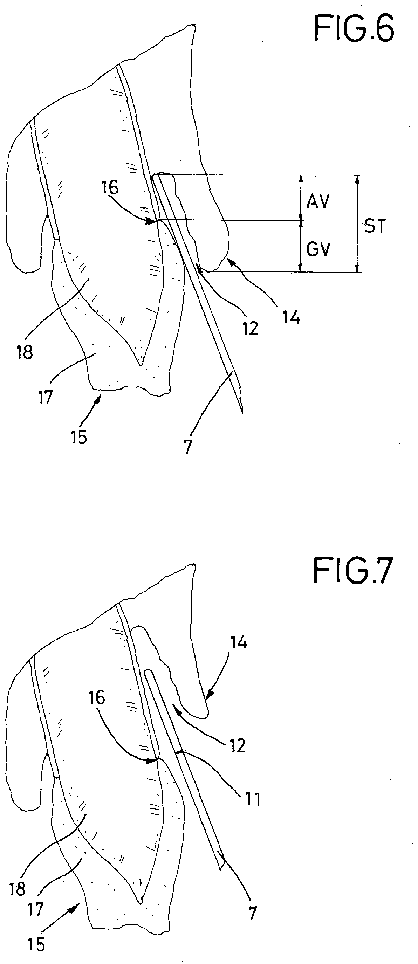

Bei der in Fig. 6 dargestellten Situation liegt eine Wucherung der Gingiva 14 vor, so dass die Schmelz-Zement-Grenze 16 innerhalb der Gingiva 14 verläuft. Der Gingivaverlauf GV liegt in dem Bereich, der mittels der Kamera der Intraoral-Sonde 1 nicht erfassbar ist, nämlich innerhalb der Sondierungstiefe ST, so dass er einen negativen Wert ergibt. Die mittels der Intraoral-Sonde 1 erfassbare Sondierungstiefe ST gibt die Beeinträchtigung des Zahnhalteapparates größer als tatsächlich und damit fehlerhaft wieder, denn der insgesamt vorliegende Attachmentverlust AV ergibt sich aus der Summe von Sondierungstiefe ST und dem - negativen - Gingivaverlauf GV, so dass der Attachmentverlust AV geringer ist als es der ermittelten Sondierungstiefe ST entspricht.

Fig. 7 erläutert, wie mittels einer Untersuchungsspitze 7 der vorschlagsgemäßen Intraoral-Sonde 1 der Gingivaverlauf GV ermittelt wird. Die Untersuchungsspitze 7 wird in die Zahntasche 12 eingeführt, bis eine Referenzlinie 11 sich auf Höhe der Schmelz-Zement-Grenze 16 befindet. Bei dem Ausführungsbeispiel der Fig. 7 ist lediglich eine einzige Referenzlinie 11 an der Untersuchungsspitze 7 vorgesehen. Ein manuell eingegebenes Signal löst nun die automatische Auswertung des von der Kamera der Intraoral-Sonde 1 erfassten Bildes aus, wobei der Abstand zwischen der Referenzlinie 11 und dem Beginn der Gingiva 14 - also der Wert des Gingivaverlaufs GV - automatisch berechnet wird.

Falls keine Rückbildung der Gingiva 14 wie in Fig. 7 vorliegt, sondern eine Wucherung der Gingiva 14 wie in Fig. 6, so ist in den meisten Fällen dennoch die Referenzlinie 11 innerhalb der Zahntasche 12 für die Person sichtbar, welche die Intraoral-Sonde 1 bedient, so dass auch in diesem Fall die Referenzlinie 11 auf Höhe der Schmelz-Zement-Grenze 16 positioniert werden kann und das entsprechende Startsignal gegeben werden kann, um die automatische Berechnung des Gingivaverlaufs GV auszulösen.

Zusammen mit dem Wert der Sondierungstiefe ST, die ebenfalls mittels der Intraoral-Sonde 1 erfasst werden kann, ermöglicht die Erfassung des Gingivaverlaufs GV eine automatische Berechnung des klinisch relevanten Attachmentverlustes AV.

Es kann vorgesehen sein, an der Untersuchungsspitze 7 nicht nur eine einzige Referenzlinie 11 wie in Fig. 7 vorzusehen, sondern zwei oder mehrere Referenzlinien 11 wie in den Fig. 1 und 2. In diesem Fall wird durch die Person, welche die Intraoral-Sonde 1 bedient, nicht nur das erwähnte Startsignal an die elektronische Auswertungsschaltung übermittelt, wenn sich die Referenzlinie 11 auf Höhe der Schmelz-Zement-Grenze 16 befindet, sondern auch eine Information darüber, welche der Referenzlinien 11 sich auf Höhe der Schmelz-Zement-Grenze 16 befindet. Dies kann beispielsweise durch eine Sprachsteuerung erfolgen, wobei jeder Referenzlinie 11 ein eigener Befehl zugeordnet ist, wie z. B. "eins", "zwei" oder "drei", bzw. "oben" "Mitte" oder "unten" zur Unterscheidung von jeweils drei Referenzlinien 11. Oder es kann eine Betätigung unterschiedlicher Bedienelemente vorgesehen sein, z. B. dreier unterschiedlicher Taster, wobei jeder Referenzlinie 11 jeweils nur einer dieser Taster zugeordnet ist. Oder es kann eine wiederholte Betätigung eines Bedienelements vorgesehen sein, z. B. die ein-, zwei- oder dreifache Betätigung desselben Tasters. Es kann aber auch vorgesehen sein, dass die Person, welche die Intraoral-Sonde 1 bedient, die Information über die relevante Referenzlinie 11 einem Assistenten mündlich übermittelt, und der Assistent betätigt dann ein Eingabegerät, z. B. eine Tastatur, einen Touch-Screnn oder dergleichen. In jedem Fall kann anschließend an das Startsignal und evtl. an die Identifizierung der relevanten Referenzlinie 11 eine vollautomatische Berechnung des Gingivaverlaufs GV erfolgen.

## Patentansprüche

1. Intraoral-Sonde (1) zur Erfassung des Parodontalstatus, mit einer auswechselbaren Untersuchungsspitze und einem Griffstück (2), welches am vorderen Ende eine Halterung für die auswechselbare Untersuchungsspitze (7) aufweist
und welches mit Übertragungsmitteln zur Übertragung von Signalen zu einem Auswertungsgerät versehen ist, wobei die Untersuchungsspitze (7) rotationsfest am Griffstück (2) festlegbar ist, wobei das Griffstück (2) eine Kamera aufweist,
sowie eine Objektivöffnung (9),
und die Untersuchungsspitze (7) im Blickfeld der Kamera angeordnet ist
**dadurch gekennzeichnet,**
**dass** die Objektivöffnung (9) am Umfang des Griffstücks (2) angeordnet ist, derart, dass das Blickfeld der Kamera radial aus dem Griffstück (2) weisend ausgerichtet ist.

2. Sonde nach Anspruch 1,
**dadurch gekennzeichnet,**
**dass** die Untersuchungsspitze (7) zumindest auf ihrer im Blickfeld der Kamera liegenden Oberfläche eine von den natürlichen, intraoral vorkommenden Farben abweichende Farbe aufweist.

3. Sonde nach Anspruch 2,
**dadurch gekennzeichnet,**
**dass** die Untersuchungsspitze (7) zumindest auf ihrer im Blickfeld der Kamera liegenden Oberfläche eine blaue oder grüne Farbgebung aufweist.

4. Sonde nach einem der vorhergehenden Ansprüche,
**dadurch gekennzeichnet,**
**dass** die Untersuchungsspitze (7) von einer axialen oder koaxialen Ausrichtung abweichend zum Griffstück (2) verläuft.

5. Sonde nach den Ansprüchen 3 und 4,
**dadurch gekennzeichnet,**
▪ dass das Griffstück (2) einen Abschnitt mit einer vom Kreisrund abweichenden Querschnittskontur aufweist,
▪ die Untersuchungsspitze (7) lösbar an diesem Abschnitt festlegbar ist,
▪ dieser Abschnitt des Griffstücks (2) um 180° rotationssymmetrisch ausgestaltet ist
▪ und die Untersuchungsspitze (7) in zwei um 180° gedrehten Ausrichtungen an diesem Abschnitt festlegbar ist.

6. Sonde nach einem der vorhergehenden Ansprüche,
**dadurch gekennzeichnet,**
**dass** die Untersuchungsspitze (7) an einem auf das Griffstück (2) aufsteckbaren Klemmring (3) gehalten ist.

7. Sonde nach Anspruch 6,
**dadurch gekennzeichnet,**
**dass** der Klemmring (3) beiderseits von der Kamera am Griffstück (2) anliegt
und eine das Blickfeld der Kamera frei lassende Ausnehmung aufweist.

8. Sonde nach einem der vorhergehenden Ansprüche,
**dadurch gekennzeichnet,**
**dass** im Auswertungsgerät ein Datenspeicher vorgesehen ist,
und **dass** dem Auswertungsgerät ein Schalter zugeordnet ist, welcher die Abspeicherung der momentan erfassten Zahntaschentiefe auslösend angeschlossen ist.

9. Sonde nach Anspruch 8,
**dadurch gekennzeichnet,**
**dass** der Schalter als Fußschalter ausgestaltet ist.

10. Sonde nach einem der vorhergehenden Ansprüche,
**dadurch gekennzeichnet,**
**dass** eine Beleuchtungseinrichtung (10) vorgesehen ist, die auf das Blickfeld der Kamera ausgerichtet ist.

11. Sonde nach Anspruch 10,
**dadurch gekennzeichnet,**
**dass** eine LED neben der Objektivöffnung (9) angeordnet ist.

12. Verfahren zur Ermittlung der Tiefe einer sich von einer Oberfläche aus einige Millimeter in die Tiefe erstreckenden Vertiefung mittels einer nach einem der vorhergehenden Ansprüche ausgestalteten Intraoral-Sonde (1),
wobei sich die an einem Griffstück (2) gehaltene, eine definierte Länge aufweisende und sich bis auf den Grund der Vertiefung erstreckende Untersuchungsspitze (7) teilweise in der Vertiefung befindet,
wobei die Kamera automatisch den aus der Vertiefung ragenden Anteil der Untersuchungsspitze (7) erfasst,
und wobei mittels einer elektronischen Auswertungsschaltung die Länge dieses erfassten Anteils der Untersuchungsspitze (7) automatisch ermittelt wird, und anhand dieser ermittelten Länge automatisch die Tiefe der Vertiefung als so genannte Sondierungstiefe ermittelt wird, und diese Sondierungstiefe automatisch auf einem Display angezeigt und / oder in einem elektronischen Speicher gespeichert wird,
und dass der Gingivaverlauf automatisch ermittelt wird, indem der Abstand zwischen einer Referenzlinie und dem Beginn des Zahnfleischrandes automatisch mittels der Kamera der Intraoral-Sonde (1) und einer elektronischen Auswertungsschaltung ermittelt wird,
und dass die beiden zunächst automatisch ermittelten Werte der Sondierungstiefe und des Gingivaverlaufs automatisch addiert werden und der resultierende Wert als Maß des so genannten "attachment level" angezeigt und / oder in einem elektronischen Speicher gespeichert wird.

13. Verfahren nach Anspruch 12,
**dadurch gekennzeichnet,**
**dass** die Kamera ununterbrochen den in ihrem Blickfeld sichtbaren Anteil der Untersuchungsspitze (7) erfasst, und dass zu einem bestimmten Zeitpunkt, wenn ein Befehlssignal an die Auswertungsschaltung übermittelt wird, der Tiefen-Wert der Vertiefung ermittelt wird und abgespeichert wird.

14. Verfahren nach Anspruch 13,
**dadurch gekennzeichnet,**
**dass** der Befehl durch die Betätigung eines Schalters gegeben wird.

15. Verfahren nach Anspruch 14,
**dadurch gekennzeichnet,**
**dass** der Befehl als Sprachbefehl gegeben wird, wobei die elektronische Auswertungsschaltung ein als Sprachsteuerung bezeichnetes Modul aufweist, welches mittels eines Mikrofons ununterbrochen Umgebungsgeräusche erfassend und gesprochene Befehle in Schaltbefehle umsetzend ausgestaltet ist.

16. Verfahren nach einem der Ansprüche 12 bis 15,
**dadurch gekennzeichnet,**
**dass** anhand der sichtbaren Länge der Untersuchungsspitze (7) automatisch deren unsichtbare Länge ermittelt wird, und dass dieser ermittelte Wert als Tiefen-Wert gespeichert wird.

17. Verfahren nach Anspruch 16,
**gekennzeichnet durch**
die folgenden, nacheinander ablaufenden Verfahrensschritte:
▪ eine bestimmte Stelle im Blickfeld der Kamera, an welcher sich die Untersuchungsspitze (7) im Blickfeld der Kamera befindet, wird als Referenzstelle definiert,
▪ die an dieser Referenzstelle ermittelte Farbe wird als Referenzfarbe definiert,
▪ ausgehend von der Referenzstelle wird automatisch in benachbarten Bildbereichen das Vorhandensein der Referenzfarbe überprüft,
▪ anhand der Länge des Bildbereichs, welcher die Referenzfarbe aufweist, wird automatisch die von der Kamera erfasste sichtbare Länge der Untersuchungsspitze (7) bestimmt.

18. Verfahren nach Anspruch 17,
**dadurch gekennzeichnet,**
**dass** das Vorhandensein der Referenzfarbe entlang einer vorgegebenen Linie überprüft wird, auf welcher sich die Untersuchungsspitze (7) im Blickfeld der Kamera befindet, und dass automatisch eine Grenzstelle ermittelt wird, an welcher das Vorhandensein der Referenzfarbe entlang dieser Linie endet,
und **dass** in der Auswertungsschaltung eine Datenbank vorhanden ist, welche als Vergleichstabelle ausgestaltet ist und eine Liste mit unterschiedlichen Grenzstellen enthält sowie unterschiedliche Werte von Tiefen-Werten, von denen jeweils ein Wert genau einer Grenzstelle zugeordnet ist,
und **dass** anhand dieser Vergleichstabelle automatisch der Tiefen-Wert bestimmt wird, welcher der ermittelten Grenzstelle zugeordnet ist.

19. Verfahren nach einem der Ansprüche 12 bis 18,
**dadurch gekennzeichnet,**
**dass** der Verlauf der Schmelz-Zement-Grenze in dem von der Intraoral-Sonde erfassten anhand des Kontrastes zwischen dem Zahnschmelz und dem Zahnfleisch automatisch mittels einer elektronischen Bildauswertung berechnet wird.

20. Verfahren nach Anspruch 19,
**dadurch gekennzeichnet,**
**dass** der Kontrast zwischen dem Zahnschmelz und dem Zahnfleisch automatisch mittels einer elektronischen Bildbearbeitung erhöht wird, bevor der Verlauf der Schmelz-Zement-Grenze berechnet wird.

21. Verfahren nach einem der Ansprüche 12 bis 20,
**dadurch gekennzeichnet,**
**dass** die mit der Intraoral-Sonde erfassten Bilder abgespeichert werden.

22. Verfahren nach Anspruch 21,
**dadurch gekennzeichnet,**
**dass** die Bilder mehrerer, in zeitlichen Abständen erfolgender Untersuchungen desselben Patienten gespeichert werden, und dass die denselben Zahn betreffenden Bilder in chronologischer Ordnung als Film wiedergegeben werden.

23. Verfahren nach Anspruch 22,
**dadurch gekennzeichnet,**
**dass** mittels der an sich bekannten Morphing-Technologie automatisch Zwischenbilder berechnet werden, welche die Situation simulieren, die zwischen zwei mit der Intraoral-Sonde aufgenommenen Bildern vorliegt.

24. Verfahren nach einem der Ansprüche 21 bis 23,
**dadurch gekennzeichnet,**
**dass** die Bilder einzelner Zähne zu einem Panoramabild zusammengefügt werden und sämtliche Zähne des oberen bzw. unteren Kiefers auf derselben Darstellung dargestellt werden.

## Claims

1. Intraoral probe (1) for recording periodontal status which intraoral probe (1) has a changeable probe tip and a handle portion (2) that incorporates at the front end a means of holding the changeable probe tip (7) and is provided with means of transmission for transmitting signals to an evaluating device,
where the probe tip (7) can be non-rotatorily fastened to the handle portion (2), where the handle portion (2) incorporates a camera, and a lens aperture (9), and the probe tip (7) is disposed within the camera's field of view,
**characterised in that** the lens aperture (9) is disposed on the circumference of the handle portion (2) such that the camera's field of view is directed radially out of the handle portion (2).

2. Probe in accordance with claim 1, **characterised in that** the probe tip (7) has at least on its surface situated within the camera's field of view a different colour from the natural colours occurring intraorally.

3. Probe in accordance with claim 2, **characterised in that** the probe tip (7) is at least on its surface situated within the camera's field of view coloured blue or green.

4. Probe in accordance with any one of the foregoing claims, **characterised in that** the probe tip (7) is not axially or coaxially aligned with the handle portion (2).

5. Probe in accordance with claims 3 and 4, **characterised in that**
the handle portion (2) incorporates a section having a cross-sectional shape that deviates from circular,
the probe tip (7) can be detachably fastened to this section,
this section of the handle portion (2) is designed to be 180° rotation-symmetrical and the probe tip (7) can be detachably fastened to this section and turned 180° to point in either of two directions.

6. Probe in accordance with any one of the foregoing claims, **characterised in that** the probe tip (7) is held on a locking ring (3) that can be fitted over the handle portion (2).

7. Probe in accordance with claim 6, **characterised in that** the locking ring (3) lies against the handle portion (2) on both sides of the camera and incorporates an opening that leaves the camera's field of view free.

8. Probe in accordance with any one of the foregoing claims, **characterised in that** a data storage means is provided for in the evaluating device and that assigned to the evaluating device is a switch that causes the dental pocket depth currently being recorded to be stored.

9. Probe in accordance with claim 8, **characterised in that** the switch is designed as a foot switch.

10. Probe in accordance with any one of the foregoing claims, **characterised in that** a lighting means (10) that is aligned with the camera's field of view is provided for.

11. Probe in accordance with claim 10, **characterised in that** an LED is disposed beside the lens aperture (9).

12. Method of determining by means of an intraoral probe (1) designed in accordance with any one of the foregoing claims the depth of a depression extending a few millimetres downwards from the surface, where the probe tip (7) held on a handle portion (2) and being of a specific length and extending to the bottom of the depression is disposed partly in the depression,
where the camera automatically records that section of the probe tip (7) that projects from the depression and where by means of an electronic evaluating circuit the length of this recorded section of the probe tip (7) is automatically determined and with the aid of this determined length the depth of the depression is automatically determined as what is known as the probing depth and this probing depth is automatically shown on a display and/or is stored in an electronic storage device, and that the gingival line is automatically determined by automatically determining by means of the camera of the intraoral probe (1) and an electronic evaluating circuit the distance between a reference line and the beginning of the gingival edge and by automatically adding the two first automatically determined values for the probing depth and the gingival line and showing the resulting value as the dimension of the attachment level and/or storing this resulting value in a storage means.

13. Method in accordance with claim 12, **characterised in that** the camera uninterruptedly records that section of the probe tip (7) that can be seen in the camera's field of view and that at a specific point in time, if a command signal is sent to the evaluating circuit, the depth value of the depression is determined and stored.

14. Method in accordance with claim 13, **characterised in that** the command is given by actuating a switch.

15. Method in accordance with claim 14, **characterised in that** the command is given as a spoken command, where the electronic evaluating circuit incorporates a module described as a voice control system which is designed to record uninterruptedly by means of a microphone environmental noises and to convert spoken commands into switching commands.

16. Method in accordance with any one of claims 12 to 15, **characterised in that** with the aid of the visible length of the probe tip (7) the unseen length of the probe tip (7) is automatically determined and that the value thus obtained is stored as a depth value.

17. Method in accordance with claim 16, **characterised by** the following consecutive method steps:
a specific point within the camera's field of view at which the probe tip (7) is disposed within the camera's field of view is specified as reference point,
the colour determined at this reference point is specified as reference colour and,
starting from the reference point, the presence of the reference colour is automatically checked in the adjacent image sections and
with the aid of the length of the image section that incorporates the reference colour that visible length of the probe tip (7) that is recorded by the camera is automatically determined.

18. Method in accordance with claim 17, **characterised in that** the presence of the reference colour is checked along a prescribed line on which the probe tip (7) is disposed in the camera's field of view and that a limit point at which the presence of the reference colour along this line ends is automatically determined and that disposed in the evaluating circuit is a data base that is designed in the form of a comparison table and contains a list of different limit points as well as different depth values each of which is precisely assigned to a limit point and that with the aid of this comparison table the depth value that is assigned to the determined limit point is automatically determined.

19. Method in accordance with any one of claims 12 to 18, **characterised in that** the line of the cement-enamel junction in the image recorded by the intraoral probe is automatically calculated by means of electronic image evaluation with the aid of the contrast between the tooth enamel and the gingiva.

20. Method in accordance with claim 19, **characterised in that** the contrast between the tooth enamel and the gingiva is automatically heightened by means of electronic image processing before the line of the cement-enamel junction is calculated.

21. Method in accordance with any one of claims 12 to 20, **characterised in that** the images recorded with the intraoral probe are stored.

22. Method in accordance with claim 21, **characterised in that** the images taken of a number of examinations of the same patient at intervals of time are stored and that the images relating to the same tooth are reproduced in chronological order as a film.

23. Method in accordance with claim 22, **characterised in that** intermediate images that simulate the situation that exists between two images taken with the intraoral probe are automatically calculated by means of morphing technology known in itself.

24. Method in accordance with claims 21 to 23, **characterised in that** the images of individual teeth are placed together to form a panoramic view and all the teeth of the upper or lower jaw are shown on the same image.

## Revendications

1. Sonde intra-orale destinée à saisir l'état parodontal, comprenant une pointe d'examen interchangeable et une poignée (2) munie en son extrémité avant d'un support pour la pointe d'examen (7) interchangeable, et qui est munie de moyens permettant de transmettre des signaux à un appareil d'analyse, sachant que la pointe d'examen (7) est immobilisable contre la poignée (2) pour l'empêcher de tourner, sachant que la poignée (2) présente une caméra ainsi qu'un orifice pour objectif (9), et que la pointe d'examen (7) est disposée dans le champ de vision de la caméra, **caractérisé en ce que** l'orifice de l'objectif (9) est disposé sur la périphérie de la poignée (2) de sorte que le champ de vision de la caméra est orienté en direction radiale depuis la poignée (2).

2. Sonde selon la revendication 1, **caractérisée en ce que** la pointe d'examen (7) présente, au moins sur sa surface située dans le champ de vision de la caméra, une couleur différente des couleurs naturelles rencontrées en milieu intra-oral.

3. Sonde selon la revendication 2, **caractérisée en ce que** la pointe d'examen (7) présente, au moins sur sa surface située dans le champ de vision de la caméra, une coloration bleue ou verte .

4. Sonde selon l'une des revendications précédentes, **caractérisée en ce que** la pointe d'examen (7) a un tracé différent de l'orientation axiale ou co-axiale de la poignée (2) .

5. Sonde selon les revendications 3 et 4, **caractérisée en ce que**
* la poignée (2) présente un segment dont le contour de section diffère d'un contour circulaire,
* la pointe d'examen (7) peut être fixée de manière détachable contre ce segment,
* ce segment de la poignée (2) est configuré symétrique en rotation à 180°
* et **en ce que** la pointe d'examen (7) est immobilisable contre ce segment dans deux directions opposées à 180°.

6. Sonde selon l'une des revendications précédentes, **caractérisée en ce que** la pointe d'examen (7) est retenue contre une bague de bridage (3) enfichable sur la poignée (2).

7. Sonde selon la revendication 6, **caractérisée en ce que** la bague de bridage (3) applique des deux côtés de la caméra contre la poignée (2) et présente un évidement laissant libre de champ de vision de la caméra.

8. Sonde selon l'une des revendications précédentes, **caractérisée en ce qu'**une mémoire de données est prévue dans l'appareil d'analyse et qu'à l'appareil d'analyse est affecté un interrupteur raccordé pour déclencher la mémorisation de la profondeur de la poche parodontale saisie à l'instant.

9. Sonde selon la revendication 8, **caractérisée en ce que** l'interrupteur est configuré en pédale de commutation.

10. Sonde selon l'une des revendications précédentes, **caractérisée en ce qu'**est prévu un dispositif d'éclairage (10) orienté sur le champ de vision de la caméra.

11. Sonde selon la revendication 10, **caractérisée en ce qu'**une LED est disposée à côté de l'orifice (9) de l'objectif.

12. Procédé pour déterminer la profondeur d'un creux s'étendant sur quelques millimètres de profondeur depuis la surface, au moyen d'une sonde intra-orale (1) configurée selon l'une des revendications précédentes, sachant que la pointe d'examen (7) retenue par une poignée (2), présentant une longueur définie et s'étendant jusqu'au fond du creux se trouve en partie dans le creux, sachant que la caméra saisit automatiquement la partie de la pointe d'examen (7) faisant saillie hors du creux et sachant qu'au moyen d'un circuit d'analyse électronique la longueur de cette partie saisie de la pointe d'examen (7) est automatiquement déterminée, et qu'à l'aide de cette longueur déterminée la profondeur du creux est automatiquement déterminée comme profondeur dite de sondage, et que cette profondeur de sondage s'affiche automatiquement sur un écran et/ou qu'elle est enregistrée dans une mémoire électronique, et que le tracé gingival est automatiquement déterminé en déterminant l'écart entre une ligne de référence et le début du bord de la gencive au moyen de la caméra de la sonde intra-orale (1) et d'un circuit d'analyse électronique, et que les deux valeurs de la profondeur de sondage et du tracé gingival déterminées dans un premier temps de façon automatique sont automatiquement additionnées et que la somme qui en résulte est affichée comme cote pour « l'attachment level » ainsi nommé et qu'elle est enregistrée dans une mémoire électronique.

13. Procédé selon la revendication 12, **caractérisé en ce que** la caméra saisit en permanence la partie de la pointe d'examen (7) visible dans son champ de vision, et **en ce qu'**à un certain moment, lorsqu'un signal d'ordre est communiqué au circuit d'analyse, la valeur de profondeur du creux est déterminée et mémorisée.

14. Procédé selon la revendication 13, **caractérisé en ce que** l'ordre est donné en actionnant un interrupteur.

15. Procédé selon la revendication 14, **caractérisé en ce que** l'ordre est donné sous forme d'ordre vocal, sachant que le circuit d'analyse électronique présente un module appelé commande vocale qui saisit en permanence les bruits ambiants au moyen d'un micro et qui est configuré pour transformer les ordres vocaux en ordres de commutation.

16. Procédé selon l'une des revendications 12 à 15, **caractérisé en ce que** la longueur visible de la pointe d'examen (7) permet de déterminer automatiquement sa longueur invisible, et que cette valeur déterminée est mémorisée comme valeur de profondeur.

17. Procédé selon la revendication 16, **caractérisé par** les étapes de procédé successives suivantes :
* un endroit précis dans le champ de vision de la caméra, endroit où se trouve la pointe d'examen (7), est défini comme étant l'endroit de référence,
* la couleur déterminée en cet endroit de référence est définie comme étant la couleur de référence,
* en partant de l'endroit de référence, il est automatiquement vérifié dans les zones d'image voisines si la couleur de référence est présente,
* à l'aide de la longueur de la zone d'image présentant la couleur de référence, la longueur visible de la pointe d'examen (7) saisie par la caméra est automatiquement déterminée.

18. Procédé selon la revendication 17, **caractérisé en ce qu'**est vérifiée la présence de la couleur de référence le long d'une ligne spécifiée sur laquelle la pointe d'examen (7) se trouve dans le champ de vision de la caméra, et **en ce qu'**est automatiquement déterminé un endroit limite où la présence de la couleur de référence prend fin le long de cette ligne, et **en ce qu'**il y a une base de données dans le circuit d'analyse, base de données qui est configurée comme tableau comparatif contenant une liste de différentes zones limites ainsi que différentes valeurs de profondeur dont respectivement une valeur est exactement attribuée à une zone limite, et **en ce qu'**à l'aide de ce tableau comparatif est automatiquement déterminée la valeur de profondeur attribuée à la zone limite déterminée.

19. Procédé selon l'une des revendications 12 à 18, **caractérisé en ce que** le tracé de l'interface émail/ciment dans l'image saisie par la sonde intra-orale est automatiquement calculé à l'aide du contraste entre l'émail dentaire et la gencive au moyen d'une analyse de l'image.

20. Procédé selon la revendication 19, **caractérisé en ce que** le contraste entre l'émail dentaire et la gencive est automatiquement accru à l'aide d'un traitement électronique de l'image avant de calculer le tracé de l'interface émail/ciment.

21. Procédé selon l'une des revendications 12 à 20, **caractérisé en ce que** les images saisies par la sonde intra-orale sont mémorisées.

22. Procédé selon la revendication 21, **caractérisé en ce que** les images de plusieurs examens du même patient espacés dans le temps sont mémorisées et **en ce que** les images concernant la même dent sont reproduites dans un ordre chronologique sous forme de film.

23. Procédé selon la revendication 22, **caractérisé en ce qu'**à l'aide de la technologie connue du morphage des images intermédiaires sont automatiquement calculées pour simuler la situation en présence entre deux images prises à l'aide de la sonde intra-orale.

24. Procédé selon l'une des revendications 21 à 23, **caractérisé en ce que** les images de dents individuelles sont assemblées en une image panoramique et que toutes les dents de la mâchoire supérieure et de la mâchoire inférieure sont représentées sur la même image.
